## Europäisches Patentamt
## European Patent Office
## Office européen des brevets

(19)

(11) Veröffentlichungsnummer: **0 080 007**
**B1**

(12)

# EUROPÄISCHE PATENTSCHRIFT

(45) Veröffentlichungstag der Patentschrift:
**10.04.85**

(51) Int. Cl.⁴: **F 03 B 13/12**

(21) Anmeldenummer: **82102089.8**

(22) Anmeldetag: **15.03.82**

(54) **Wellenkraftmaschine.**

(43) Veröffentlichungstag der Anmeldung:
**01.06.83 Patentblatt 83/22**

(45) Bekanntmachung des Hinweises auf die Patenterteilung:
**10.04.85 Patentblatt 85/15**

(84) Benannte Vertragsstaaten:
**AT BE CH DE FR GB IT LI LU NL SE**

(56) Entgegenhaltungen:
**DE - A - 2 704 129**
**DE - A - 2 737 143**
**FR - A - 1 066 828**
**FR - A - 2 406 092**
**GB - A - 181 431**
**GB - A - 2 050 522**
**US - A - 3 335 667**
**US - A - 4 123 667**
**US - A - 4 145 882**

(73) Patentinhaber: **Quarz, Horst, Lübbecker Strasse 103,
D-4950 Minden (DE)**

(72) Erfinder: **Quarz, Horst, Lübbecker Strasse 103,
D-4950 Minden (DE)**

## Beschreibung

Die Erfindung liegt auf dem Gebiet der Wellenkraftmaschinen und betrifft insbesondere eine neuartige Membranpumpe zur Ausnutzung der Energie von Meereswellen.

Sie besteht im wesentlichen aus einer über Schwimmkörper auf einem Gewässer schwimmbaren Plattform mit einem Wellenkanal, der an seiner nach unten weisenden Seite von einer die Wellenbewegung des Wassers mitmachenden Membrane abgeschlossen ist, so dass in dem oberhalb der Membrane eingeschlossenen Kanalteil durch Wellenbewegung der Membrane Wasser durch eine krafterzeugende Maschine und über einen Rücklaufkanal gepumpt wird. Dabei sind im abgeschlossenen Kanalteil zum Strömen des Wassers in nur einer Richtung Einwegventile bzw. -klappen angeordnet.

Die aus Stahlblech, Kunststoff, textilen oder gummierten Stoffen bzw. aus einem anderen elastischen Material bestehende Membrane wird zwischen Doppelrollen gehalten, die zur Ermöglichung einer Wellenbewegung der Membrane über Führungen in der Senkrechten heb- und senkbar gelagert sind.

Zur optimalen Wirksamkeit der Anlage ist eine Beschwerungsschicht an der Plattform vorgesehen.

Innerhalb der Wellenkraftmaschine wird das gepumpte Wasser vorteilhafterweise in einem geschlossenen Kreislauf geführt, wobei, gesehen in Strömungsrichtung des gepumpten Wassers, der Rücklaufkanal nach der krafterzeugenden Maschine und oberhalb des abgeschlossenen Kanalteils angeordnet ist.

Für andere Arten von Leistungsgewinnung (z. B. Schiffsantriebe) kann es nötig sein, auf diese Form des geschlossenen Kreislaufs zu verzichten und das Meerwasser am Kanaleingang anzusaugen, um es am Kanalende wieder ins Meer hinauszupumpen.

Um die Wirksamkeit dieses Systems zu gewährleisten, ist es notwendig, die schwimmbaren Plattformen so fest im oder am Grund zu verankern, dass sie die Wellenbewegung insgesamt nicht mitmachen können.

Die Grössenordnung der Wellenkanäle, der Membranen und die Anzahl der sie führenden Doppelrollen wie auch die Anzahl der Einwegventile bzw. -klappen, hängt von der jeweiligen vorherrschenden Wellenformation in den entsprechenden Seegebieten ab.

Der Versuch, mit durch Wellenbewegung deformierbaren Aussenhäuten Wellenkraftmaschinen zu betreiben, ist schon mehrfach unternommen worden. So weist auch das Patent US-A Nr. 4123667 eine bewegliche Aussenhaut aus, über die mittels der Wellenbewegung ein Wasserkreislauf Leistung erbringen soll.

Die wesentlichen Veränderungen und Vorteile der hier vorgestellten Wellenkraftmaschine bestehen:

1. in einer völlig andersartigen Membran- und Plattformkonstruktion, die auf Grund ihrer Bauweise und der flexiblen, zwischen Doppelrollen geführten Membrane, in der Lage ist, grossflächig den Wellenkonturen zu folgen, d. h. die Wellen nicht linear zu brechen (quer zur Welle), sondern die Kraft der Welle kontinuierlich (mit der Welle) über die gesamte Länge der Membrane aufzunehmen, und

2. in einer einfacheren und übersichtlicheren Gesamtkonstruktion, die es auf Grund ihrer Membrankonstruktion zudem ermöglicht, pro Wellendurchlauf ein wesentlich grösseres Wasservolumen in einen geschlossenen Kreislauf zu bewegen.

Die Kombination mehrerer seitlich versetzt angebrachter Wellenkanäle in einer Plattform erhöht die Kontinuierlichkeit des Wasserkreislaufs und die Gesamtleistung.

Im folgenden wird die Erfindung anhand von Ausführungsbeispiele darstellenden Zeichnungen näher erläutert.

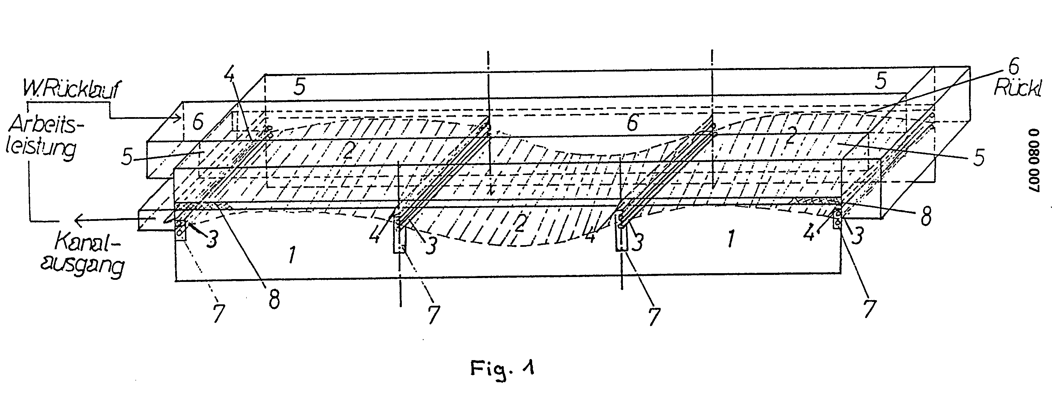

Fig. 1 zeigt in perspektivischer Darstellung einen erfindungsgemässen Wellenkanal (1) mit in vier Doppelrollen (3) gehaltener Membrane (2). Oberhalb der Doppelrollen (3) mit ihren Führungen (7) zeigt sie die Einwegventile bzw. -klappen (4). Über dem Wellenkanal befinden sich die Schwimmkörper (5) und der Rücklaufkanal (6) und zwischen den beiden die Beschwerungsschicht (8).

Fig. 2 zeigt einen Querschnitt durch diesen Wellenkanal mit Schwimmkörpern (5), Rücklaufkanal (6), Beschwerungsschicht (8), Einwegventil bzw. -klappe (4), Doppelrollen (3) mit Führungen (7) und der von ihnen gehaltenen Membrane (2).

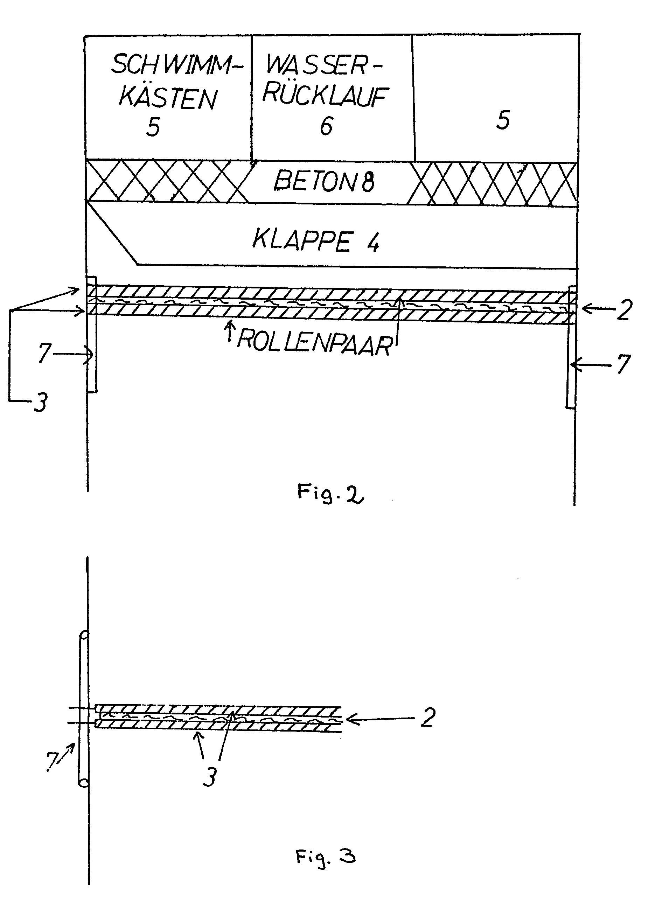

Fig. 3 zeigt ein weiteres Ausführungsbeispiel für die Führung (7) der die Membrane (2) haltenden Doppelrollen (3).

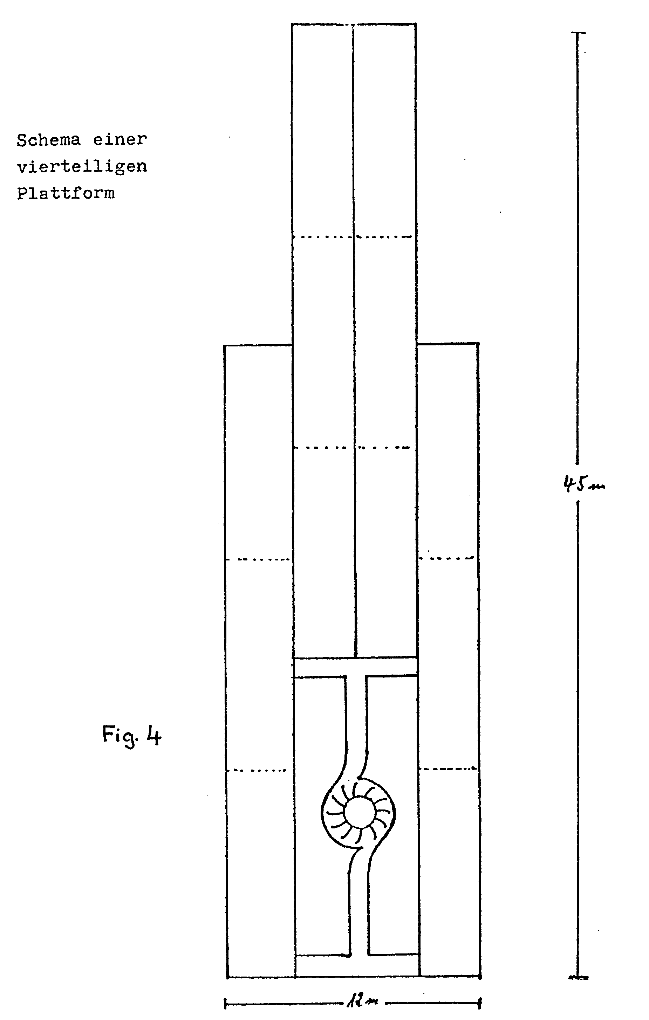

Fig. 4 zeigt als Beispiel das Schema einer vierteiligen Plattform mit seitlich versetzten Wellenkanälen.

## Patentansprüche

1. Wellenkraftmaschine mit einer über Schwimmkörper (5) auf einem Gewässer schwimmbaren Plattform mit einem Wellenkanal (1), der an seiner nach unten weisenden Seite von einer eine Wellenbewegung des Gewässers mitmachenden Membrane (2) abgeschlossen ist, derart, dass in dem oberhalb der Membrane (2) eingeschlossenen Kanalteil durch Wellenbewegung der Membrane (2) Wasser durch eine krafterzeugende Maschine und über einen Rücklaufkanal (6) gepumpt wird, wobei im abgeschlossenen Kanalteil zum Strömen des gepumpten Wassers in nur einer Richtung Einwegventile bzw. -klappen (4) angeordnet sind, dadurch gekennzeichnet, dass die aus Stahlblech, Kunststoff, textilen oder gummierten Stoffen bzw. aus einem anderen elastischen Material bestehende Membrane (2) zwischen Doppelrollen (3) gehalten ist, die zur Ermöglichung einer Wellenbewegung der Membrane (2) über Führungen (7) in der Senkrechten heb- und senkbar gelagert sind, und dass eine Beschwerungsschicht (8) an der Plattform vorgesehen ist.

2. Wellenkraftmaschine nach Anspruch 1, dadurch gekennzeichnet, dass das gepumpte Wasser in einem geschlossenen Kreislauf geführt wird, wobei, gesehen in Strömungsrichtung des gepumpten Wassers, der Rücklaufkanal (6) nach der krafterzeugenden Maschine und oberhalb des abgeschlossenen Kanalteils angeordnet ist.

## Claims

1. Wave power engine including a platform, which is floatable on the water, provided with a wave channel (1) closed at its downward side by a diaphragm (2) participating at the movement of the waves so that in the channel part closed, above the diaphragm (2), water is pumped by a power engine and through a return channel (6), one-way valves and/or flaps (4) being disposed in one sole direction, characterized by the fact that the diaphragm (2), consisting of sheet steel, synthetic materials, textiles, rubber-coated cloth, or another elastic material, is held between double rollers (3), which, to render possible a wave-like movement by the diaphragm (2), are supported by guiding devices (7) and can be raised or lowered in a vertical position, and, moreover, that a layer of heaviness (8) is provided at the platform.

2. Wave power engine according to Claim 1, characterized by the fact that the water pumped is guided in a closed circuit, the return channel (6) being disposed, seen in flow direction of the pumped water, behind the power engine and above the closed channel part.

## Revendications

1. Machine motrice ondulatoire avec une plate-forme flottant sur les eaux *via* un flotteur (5) avec un canal d'ondes (1). Sur son côté inférieur, celui-ci est fermé par un diaphragme (2) accompagnant le mouvement ondulatoire de l'eau, si bien que, dans la partie du canal se trouvant au-dessus du diaphragme (2), de l'eau est pompée *via* une machine motrice et par un canal de reflux (6), ceci par le mouvement ondulatoire du diaphragme (2). Pour le flux de l'eau dans une direction seulement, des valves à une voie (4) sont disposées dans la partie du canal fermée.

Machine motrice ondulatoire avec la caractéristique qu'un diaphragme (2) consistant en tôle d'acier, matière synthétique, tissus textiles ou engommés ou en une autre matière élastique est tenu entre des doubles rouleaux (3) étant montés *via* des entraînements (7) à levée et descente verticales, permettant ainsi le mouvement ondulatoire du diaphragme (2), et qu'une couche de charge (8) est prévue sur la plate-forme.

2. Machine motrice ondulatoire selon la revendication 1, avec la caractéristique que l'eau pompée est guidée de préférence dans une circulation fermée d'où — vu dans la direction du flux de l'eau pompée — le canal de reflux (6) est disposé après la machine motrice et au-dessus de la partie du canal fermée.

Fig. 1

| SCHWIMM-KÄSTEN | WASSER-RÜCKLAUF | |
| 5 | 6 | 5 |

BETON 8

KLAPPE 4

ROLLENPAAR

2

7

3

7

Fig. 2

2

7

3

Fig. 3

Schema einer
vierteiligen
Plattform

Fig. 4

45 m

12 m